# EUROPEAN PATENT SPECIFICATION

(11) **EP 4 590 162 B1**
(45) Date of publication and mention of the grant of the patent: **12.08.2026**
(21) Application number: 23790069.1
(22) Date of filing: 19.09.2023
(51) Int. Cl.: A47J 31/54, F24H 1/10

(54) **AN ELECTRIC HEATER FOR A MACHINE FOR PREPARING HOT BEVERAGES**
ELEKTRISCHER HEIZKÖRPER FÜR EINE MASCHINE ZUR ZUBEREITUNG VON HEISSEN GETRÄNKEN
DISPOSITIF CHAUFFANT ÉLECTRIQUE POUR MACHINE DE PRÉPARATION DE BOISSONS CHAUDES

(30) Priority: 22.09.2022 IT 202200019398
(43) Date of publication of application: 30.07.2025
(73) Proprietor: I.R.C.A. S.p.a. Industria Resistenze Corazzate e Affini, 31029 Vittorio Veneto (IT)
(72) Inventor: ANDRONE, Claudiu, 300254 Timisoara, Timis (RO); ABRUDAN, Aurora, 400394 Periam, Timis (RO); ZOPPAS, Federico, 31100 TREVISO (IT)
(74) Representative: de Alteriis, Renato
(86) International application number: PCT/IB2023/059271
(87) International publication number: WO 2024/062382

(56) References cited:
- CN-U- 203 676 865
- IT-A1- 202000 031 001
- US-A1- 2009 310 951

## Description

### Field of the invention

The present invention relates to an electric heater, in particular of the *flow through heater* (FTH) type, for machines for preparing hot beverages, such as coffee, for example.

### Background art

Electric heaters are often used for heating a liquid, e.g., water, flowing in a tube. One particularly advantageous type of electric heaters is known as *"flow through heaters"* or FTH.

FTHs are often used in machines for preparing hot beverages, such as coffee.

FTHs comprise a metal body, in which a tube and one or more electric heating elements are arranged, e.g., one or more electric resistors. The liquid to be heated can flow in the tube, and the one or more electric resistors are adapted to heat the tube, and consequently, the liquid flowing inside the tube. In particular, the one or more electric resistors transmit the heat generated therefrom to the metal body, which, in turn, transmits heat to the tube.

Typically, the tube is brazed to the metal body. In order to carry out the brazing, in general a brazing paste, or paste for brazing, is used.

**It** is important to obtain as good a brazing as possible.

In fact, the quality of the brazing influences the conduction of heat from the metal body to the tube.

However, to date, the brazing quality is not yet optimal.

In particular, disadvantageously, the distribution of brazing paste between the tube and the metal body can be uneven.

Another of the drawbacks, which may arise during the brazing, is the exit of brazing paste from the metal body, which may undesirably cover part of the end stretches of the tube, which are outside the metal body.

Furthermore, to date, the brazing is carried out in a rather complicated manner.

Thus, the need is felt to improve **FTH** heaters, in particular, for overcoming the aforesaid limits of the background art.

Document US2009/310951A1 describes a heater according to the state of the art.

### Summary of the invention

It is an object of the present invention to produce an electric heater, in particular of the FTH type, for machines for preparing hot beverages, which allows heating the liquid, in particular, water, more effectively, quickly and efficiently.

In particular, it is an object of the invention to make an electric heater, wherein the metal body and the tube are better secured to each other.

In particular, it is an object of the present invention to improve the brazing between the metal body and the tube.

It is another object of the present invention to make an electric heater, which can be made more easily with respect to the background art.

The present invention achieves at least one of such objects, and other objects which will be apparent in the light of the present description, by means of an electric heater, according to claim 1, in particular a *flow through heater,* for a machine, e.g., a household appliance, for preparing hot beverages, the electric heater comprising
- a metal body;

at least one electric heating element, in particular adapted to generate heat when it is crossed by an electric current, arranged in the metal body;
a metal tube for the passage of a liquid to be heated, arranged in the metal body; wherein the metal tube is formed by a wall extending about an axis;
wherein the metal tube has two end stretches and a central stretch;
wherein the outer surface of the central stretch has a greater roughness than the roughness of the outer surface of each of the two end stretches.

In particular, the metal tube and the metal body are brazed to each other, in particular by brazing material. The brazing material is preferably a brazing paste or paste for brazing.

Advantageously, the roughness of the central stretch allows an improved distribution of the brazing material, in particular, of the brazing paste. In fact, the brazing material penetrates the grooves or channels of the outer surface of the central stretch.

Since the roughness of the end stretches is less than the roughness of the central stretch, it is also possible to confine better the brazing material at the central stretch, preventing it from covering the end stretches.

Improved results, in particular with reference to the aforesaid confinement, are obtained with the channels or grooves extending at least partially, substantially about the axis of the tube. Such channels or grooves extending in such manner can be obtained, for example, by satin-finishing with a satin-finishing direction extending substantially about the axis of the tube.

Among the advantageous technical effects of the invention is the improved brazing quality. Therefore, advantageously, an electric heater according to the invention allows a quick and efficient heating of the liquid, in particular water.

Furthermore, it is highlighted the greater constructional ease as it is easier to distribute the brazing paste on the central stretch, and it is also easier to confine the brazing paste at the central stretch of the tube.

The invention also relates to a machine, e.g., a household appliance, for preparing hot beverages according to claim 10.

The invention also relates to a process, according to claim 11, for obtaining an electric heater, wherein there is provided a step of
a) carrying out a mechanical processing, preferably a satin-finishing, of the surface of a central stretch of a metal tube, so as to obtain said metal tube having a central stretch with a roughness greater than the roughness of the outer surface of each of the two end stretches.

Besides creating the aforesaid channels or grooves, which allow improved distribution of the brazing paste, the mechanical processing, in particular the satin finishing, allows removing impurities, which may be undesirable for obtaining a good brazing.

Further features and advantages of the invention will be more apparent in light of the detailed description of exemplary, but non-exclusive embodiments.

The dependent claims describe particular embodiments of the invention.

### Brief description of the drawings

In the description of the invention, reference is made to the accompanying drawings, which are provided by way of non-limiting example, in which:
Fig. 1 shows a plan view from above of an example of an electric heater according to the invention;
Fig. 2 shows section A-A of Fig. 1;
Fig. 3 diagrammatically shows the tube of an electric heater according to the invention.

The same elements or components have the same reference numerals.

### Description of exemplary embodiments of the invention

With reference to the Figures, exemplary embodiments of an electric heater 1 according to the invention are described.

The electric heater 1 is designed, in particular, for a machine, e.g., a household appliance, for preparing hot beverages, such as coffee, for example.

The electric heater 1 comprises:
a metal body 2;
   - at least one (i.e., one or more) electric heating element 3, 4, in particular adapted to generate heat when it is crossed by an electric current, arranged in the metal body 2;
a metal tube 5 for the passage of a liquid to be heated, arranged in the metal body 2;

In particular, the metal tube 5 is formed by a wall 50 extending about an axis X. The metal tube 5 has two end stretches 51, 52 and a central stretch 53.

The outer surface of the central stretch 53 (in particular, the outer surface of the wall portion 50 of the central stretch 53) has a roughness Ra3 greater than the roughness Ra1, Ra2 of the outer surface of each of the two end stretches 51, 52. Thus, Ra3 is greater than Ra1, and Ra3 is greater than Ra2.

The axis X, also referred to as the axis of the tube 5, can be rectilinear (as in the example shown) or curvilinear or it can comprise one or more rectilinear stretches and one or more curvilinear stretches. For example, the axis X can comprise a curvilinear stretch extending between two rectilinear stretches.

Therefore, in other words, the tube 5 can be straight, or it can be curved, or it can comprise one or more straight stretches and one or more curved stretches.

In particular, the axis X is a longitudinal axis.

"Roughness" means the surface roughness, in particular the arithmetical mean roughness values, in particular according to the ISO 4287 standard, more particularly ISO 4287:1997.

In particular, "stretch" of the tube means a tube portion extending about the axis X, in particular completely about the axis X, and having a length thereof along the axis X.

The central stretch 53 is between the two end stretches 51, 52. In particular, the central stretch 53 is adjacent to the two end stretches 51, 52.

In particular, the metal tube 5 and the metal body 2 are brazed to each other, in particular by means of brazing material. The brazing material is preferably a brazing paste or paste for brazing.

In particular, the outer surface of the central stretch 53 is provided with a plurality of channels or grooves.

Preferably, and advantageously, the outer surface of the central stretch 53 is provided with a plurality of channels or grooves, extending substantially at least partially (e.g., partially or completely) about said axis X. Preferably, the channels or grooves extend about the axis X.

Preferably, the outer surface of the central stretch 53 has a satin finishing.

In particular, the outer surface of the central stretch 53 preferably has a satin finish with a satin finishing direction extending substantially about said axis X. Therefore, the channels or grooves produced on the surface of the central stretch 53 extend at least partially about the axis X.

Advantageously, the brazing material, e.g., the brazing paste or paste for brazing, penetrates the channels or grooves. In particular, the brazing material, in particular solidified brazing paste, is present between the metal tube 5 and the metal body 2, in particular between said central stretch 53 and the metal body 2; in particular, the brazing material being inside the channels or grooves of the outer surface of the central stretch 53.

Therefore, an improved brazing is obtained between the central stretch 53 and the metal body 2. In fact, the brazing paste, penetrating the grooves or channels, is optimally distributed.

Furthermore, in the embodiments in which the aforesaid satin finishing direction is selected, or nonetheless when the channels or grooves extend at least partially about the axis X, the exit of brazing paste from the metal body 2 is prevented or reduced and therefore the brazing paste is prevented from covering part of the end stretches 51, 52 of the tube 2 which are outside the metal body 2.

Preferably, the roughness Ra3 of the outer surface of the central stretch 53 is from 1.5 to 20 times greater, e.g., from 2 to 20 times greater or from 3 to 20 times or from 1.5 to 10 times greater than the roughness Ra1, Ra2 of the outer surface of each of the two end stretches 51, 52.

Preferably, the roughness Ra3 of the outer surface of the central stretch 53 is from 1 to 5 µm. In particular, said surface roughness values Ra3 are arithmetical mean roughness values, in particular, according to the ISO 4287 standard, more specifically ISO 4287:1997

The aforesaid values have been selected on the basis of laboratory tests. It was observed that the best results were obtained with the aforesaid values, with particular reference to the brazing quality and to the confinement of the brazing paste.

The central stretch 53 is inside the metal body 2. Preferably, the central stretch 53 is completely inside the metal body 2.

The central stretch 53 is arranged in the metal body 2 so that the metal body can transmit, in particular transmit by conduction, heat generated by the at least one electric heating element 3, 4 to the central stretch 53.

The central stretch 53, in particular, is embedded in the metal body 2.

The end stretches 51, 52 are at least partially outside the metal body 2. Preferably, the end stretches 51, 52 are completely outside the metal body 2.

Each end stretch 51, 52 of the tube 5 delimits a respective opening in the tube 5. Preferably, the tube 5 is only provided with such two openings.

Preferably, the length of the central stretch 53 is greater than the length of the two end stretches 51, 52. The lengths of the stretches 51, 52, 53 are measured along the axis X.

Preferably, each end stretch 51, 52 of the tube 5 has a length from 10 to 50 mm, preferably from 8 to 30 mm.

Preferably, the central stretch 53 has a length from 80 to 300 mm, preferably from 100 to 250 mm.

The tube 5 is a distinct element with respect to the metal body 2.

The tube 5 is preferably made of steel, preferably stainless steel.

The section area of the tube 5 can be, for example, from 15 to 5000 mm²; said section being orthogonal to the axis X.

The tube 5 can have, for example, a circular, or substantially circular, or elliptical section, or it can also have other shapes.

In all the embodiments, the electric heater 1 is configured, in particular so that the one or more electric heating elements 3, 4 can transmit heat to the tube 5 through the metal body 2.

In particular, the one or more electric heating elements 3, 4 are embedded into the metal body 2, preferably they are partially embedded into the metal body 2.

The one or more electric heating elements 3, 4 are adapted to be connected to a source of electricity and they are adapted to generate heat when they are crossed by an electric current, i.e., they can generate heat by the *Joule* effect.

By way of non-limiting example, each electric heating element 3, 4 can comprise a wire or another resistive element (or electric resistor) embedded into an electrically insulating material, e.g., magnesium oxide. Each electric heating element 3, 4 is arranged in a respective hole of the metal body 2.

The electrically insulating material can be directly in contact with the metal body 2. Alternatively, a metal shell can be provided between the electrically insulating material and the metal body 2.

Preferably, two end portions of each electric heating 3, 4 exit from the metal body 2.

The metal body 2 is preferably made of aluminum or aluminum alloy. The metal body 2 is preferably made by means of die-casting.

Preferably, the one or more electric heating elements 3, 4 extend parallel to the tube 5. In particular, the longitudinal axis of each electric heating element 3, 4 preferably extends parallel to the axis X of the tube 5.

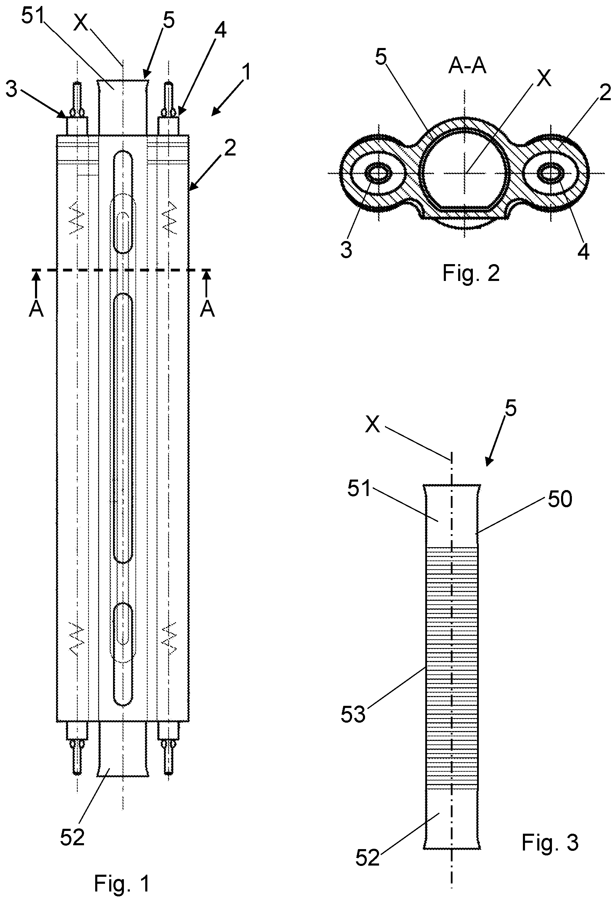

In the non-limiting example shown in Fig. 1, the electric heater 1 comprises two electric heating elements 3, 4. The electric heating elements 3, 4 flank the tube 5. In particular, the tube 5 is preferably arranged between the two electric heating elements 3, 4.

The invention also relates to a machine (not shown), e.g., a household appliance, for preparing hot beverages, in particular, coffee, comprising an electric heater 1.

An electric heater 1 can be obtained, for example, by a process comprising a step of
a) carrying out a mechanical processing, preferably a satin-finishing, of the surface of a central stretch of a metal tube, so as to obtain said metal tube 5 having a central stretch 53 with a roughness Ra3 greater than the roughness Ra1, Ra2 of the outer surface of each of the two end stretches 51, 52.

The mechanical processing is carried out with machinery. In particular, the satin finishing is carried out by means of satin finishing apparatus, in particular for metal tubes.

Besides creating the aforesaid channels or grooves, which allow improved distribution of the brazing paste, the mechanical processing allows removing impurities, which may be undesired for obtaining a good brazing.

The outer surfaces of the end stretches of the tube are preferably not subjected to mechanical processing.

Preferably, said mechanical processing, in particular said satin finishing, is carried out so that the outer surface of the central stretch 53 has the aforesaid plurality of channels or grooves, extending substantially at least partially about said axis X. After step a), the tube 5 is arranged in the metal body 2, in particular in a hole of the metal body 2, in particular in a hole that is different from each hole dedicated to a respective electric heating element 3, 4. Successively, the central stretch 53 is brazed to the metal body 2 using the brazing material, in particular the brazing paste.

## Claims

1. An electric heater (1), in particular *a flow through heater,* for a machine for preparing hot beverages, comprising
- a metal body (2);
- at least one electric heating element (3, 4), in particular adapted to generate heat when it is crossed by an electric current, arranged in the metal body (2);
- a metal tube (5), for the passage of a liquid to be heated, arranged in the metal body (2);
wherein the metal tube (5) is formed by a wall (50) extending about an axis (X);
wherein the metal tube (5) has two end stretches (51, 52) and a central stretch (53); **characterized in that** the outer surface of the central stretch (53) has a roughness (Ra3) greater than the roughness (Ra1, Ra2) of the outer surface of each of the two end stretches (51, 52).

2. An electric heater (1) according to claim 1, wherein the outer surface of the central stretch (53) is provided with a plurality of channels or grooves.

3. An electric heater (1) according to claim 2, wherein said channels or grooves extend substantially at least partially about said axis (X).

4. An electric heater (1) according to any one of the preceding claims, wherein the outer surface of the central stretch (53) is satin finished.

5. An electric heater according to claim 4, wherein the outer surface of the central stretch (53) is satin finished with a satin-finish direction extending substantially about said axis (X).

6. An electric heater (1) according to any one of the preceding claims, wherein the roughness (Ra3) of the outer surface of the central stretch (53) is from 1.5 to 20 times greater than the roughness (Ra1, Ra2) of the outer surface of each of the two end stretches (51, 52).

7. An electric heater (1) according to any one of the preceding claims, wherein the roughness (Ra3) of the outer surface of the central stretch (53) is from 1 to 5 µm.

8. An electric heater (1) according to any one of the preceding claims, wherein said central stretch (53) is inside the metal body (2); and wherein said end stretches (51, 52) are at least partially outside the metal body (2).

9. An electric heater (1) according to any one of the preceding claims, wherein brazing material is present between the metal tube (5) and the metal body (2), in particular between said central stretch (53) and the metal body (2); the brazing material being in particular inside channels or grooves of the outer surface of the central stretch (53).

10. A machine for preparing hot beverages comprising an electric heater (1) according to any one of the preceding claims.

11. A method for obtaining an electric heater (1) according to any one of the preceding claims, wherein there is provided a step of
a) carrying out a mechanical processing, preferably a satin finishing, of the surface of a central stretch of a metal tube, so as to obtain said metal tube (5) having a central stretch (53) with a roughness (Ra3) greater than the roughness (Ra1, Ra2) of the outer surface of each of the two end stretches (51, 52).

12. A method according to claim 11, wherein said mechanical processing, in particular said satin finishing, is carried out so that the outer surface of the central stretch (53) has a plurality of channels or grooves extending substantially at least partially about said axis (X).

13. A method according to claim 11 or 12, wherein, after step a), the tube (5) is inserted into the metal body (2), and then the central stretch (53) is brazed to the metal body (2) using brazing material.

## Patentansprüche

1. Elektrischer Erhitzer (1), insbesondere ein *Durchlauferhitzer,* für eine Maschine zur Zubereitung von heißen Getränken, umfassend
- einen Metallkörper (2);
- mindestens ein elektrisches Heizelement (3, 4), das insbesondere dazu geeignet ist, Wärme zu erzeugen, wenn es von einem elektrischen Strom durchflossen wird, und das in dem Metallkörper (2) angeordnet ist;
- ein Metallrohr (5) für den Durchgang einer zu erhitzenden Flüssigkeit, das in dem Metallkörper (2) angeordnet ist;
wobei das Metallrohr (5) durch eine Wand (50) gebildet ist, die sich um eine Achse (X) erstreckt; wobei das Metallrohr (5) zwei Endabschnitte (51, 52) und einen Mittelabschnitt (53) aufweist; **dadurch gekennzeichnet, dass** die Außenoberfläche des Mittelabschnitts (53) eine Rauheit (Ra3) aufweist, die größer ist als die Rauheit (Ra1, Ra2) der Außenoberfläche jedes der zwei Endabschnitte (51, 52).

2. Elektrischer Erhitzer (1) nach Anspruch 1, wobei die Außenoberfläche des Mittelabschnitts (53) mit einer Vielzahl von Kanälen oder Nuten versehen ist.

3. Elektrischer Erhitzer (1) nach Anspruch 2, wobei sich die Kanäle oder Nuten im Wesentlichen zumindest teilweise um die Achse (X) erstrecken.

4. Elektrischer Erhitzer (1) nach einem der vorhergehenden Ansprüche, wobei die Außenoberfläche des Mittelabschnitts (53) satiniert ist.

5. Elektrischer Erhitzer nach Anspruch 4, wobei die Außenoberfläche des Mittelabschnitts (53) mit einer Satinierrichtung satiniert ist, die sich im Wesentlichen um die Achse (X) erstreckt.

6. Elektrischer Erhitzer (1) nach einem der vorhergehenden Ansprüche, wobei die Rauheit (Ra3) der Außenoberfläche des Mittelabschnitts (53) 1,5- bis 20-mal größer ist als die Rauheit (Ra1, Ra2) der Außenoberfläche jedes der zwei Endabschnitte (51, 52).

7. Elektrischer Erhitzer (1) nach einem der vorhergehenden Ansprüche, wobei die Rauheit (Ra3) der Außenoberfläche des Mittelabschnitts (53) 1 bis 5 µm beträgt.

8. Elektrischer Erhitzer (1) nach einem der vorhergehenden Ansprüche, wobei sich der Mittelabschnitt (53) innerhalb des Metallkörpers (2) befindet; und wobei sich die Endabschnitte (51, 52) zumindest teilweise außerhalb des Metallkörpers (2) befinden.

9. Elektrischer Erhitzer (1) nach einem der vorhergehenden Ansprüche, wobei zwischen dem Metallrohr (5) und dem Metallkörper (2), insbesondere zwischen dem Mittelabschnitt (53) und dem Metallkörper (2), Lötmaterial vorhanden ist; wobei sich das Lötmaterial insbesondere innerhalb von Kanälen oder Nuten der Außenoberfläche des Mittelabschnitts (53) befindet.

10. Maschine zur Zubereitung von heißen Getränken, umfassend einen elektrischen Erhitzer (1) nach einem der vorhergehenden Ansprüche.

11. Verfahren zum Herstellen eines elektrischen Erhitzers (1) nach einem der vorhergehenden Ansprüche, wobei folgender Schritt vorgesehen ist a) Durchführen einer mechanischen Bearbeitung, vorzugsweise einer Satinierung, der Oberfläche eines Mittelabschnitts eines Metallrohrs, um so das Metallrohr (5) zu erhalten, das einen Mittelabschnitt (53) mit einer Rauheit (Ra3) aufweist, die größer ist als die Rauheit (Ra1, Ra2) der Außenoberfläche jedes der zwei Endabschnitte (51, 52).

12. Verfahren nach Anspruch 11, wobei die mechanische Bearbeitung, insbesondere die Satinierung, so durchgeführt wird, dass die Außenoberfläche des Mittelabschnitts (53) eine Vielzahl von Kanälen oder Nuten aufweist, die sich im Wesentlichen zumindest teilweise um die Achse (X) erstrecken.

13. Verfahren nach Anspruch 11 oder 12, wobei nach Schritt a) das Rohr (5) in den Metallkörper (2) eingesetzt wird und anschließend der Mittelabschnitt (53) unter Verwendung von Lötmaterial mit dem Metallkörper (2) verlötet wird.

## Revendications

1. Dispositif de chauffage électrique (1), en particulier un dispositif de chauffage à circulation, pour une machine de préparation de boissons chaudes, comprenant
- un corps métallique (2) ;
- au moins un élément chauffant électrique (3, 4), notamment adapté pour générer de la chaleur lorsqu'il est traversé par un courant électrique, disposé dans le corps métallique (2) ;
- un tube métallique (5) pour le passage d'un liquide à chauffer, disposé dans le corps métallique (2) ;
dans lequel le tube métallique (5) est formé par une paroi (50) s'étendant autour d'un axe (X) ; dans lequel le tube métallique (5) a deux tronçons d'extrémité (51, 52) et un tronçon central (53) ; **caractérisé en ce que** la surface extérieure du tronçon central (53) a une rugosité (Ra3) supérieure à la rugosité (Ra1, Ra2) de la surface extérieure de chacun des deux tronçons d'extrémité (51, 52).

2. Dispositif de chauffage électrique (1) selon la revendication 1, dans lequel la surface extérieure du tronçon central (53) est pourvue d'une pluralité de canaux ou de rainures.

3. Dispositif de chauffage électrique (1) selon la revendication 2, dans lequel lesdits canaux ou rainures s'étendent sensiblement au moins partiellement autour dudit axe (X).

4. Dispositif de chauffage électrique (1) selon l'une quelconque des revendications précédentes, dans lequel la surface extérieure du tronçon central (53) est satinée.

5. Dispositif de chauffage électrique selon la revendication 4, dans lequel la surface extérieure du tronçon central (53) est satinée avec une direction de finition satinée s'étendant sensiblement autour dudit axe (X).

6. Dispositif de chauffage électrique (1) selon l'une quelconque des revendications précédentes, dans lequel la rugosité (Ra3) de la surface extérieure du tronçon central (53) est de 1,5 à 20 fois supérieure à la rugosité (Ra1, Ra2) de la surface extérieure de chacun des deux tronçons d'extrémité (51, 52).

7. Dispositif de chauffage électrique (1) selon l'une quelconque des revendications précédentes, dans lequel la rugosité (Ra3) de la surface extérieure du tronçon central (53) est de 1 à 5 µm.

8. Dispositif de chauffage électrique (1) selon l'une quelconque des revendications précédentes, dans lequel ledit tronçon central (53) est à l'intérieur du corps métallique (2) ; et dans lequel lesdits tronçons d'extrémité (51, 52) sont au moins partiellement à l'extérieur du corps métallique (2).

9. Dispositif de chauffage électrique (1) selon l'une quelconque des revendications précédentes, dans lequel un matériau de brasage est présent entre le tube métallique (5) et le corps métallique (2), en particulier entre ledit tronçon central (53) et le corps métallique (2) ; le matériau de brasage étant en particulier à l'intérieur de canaux ou de rainures de la surface extérieure du tronçon central (53).

10. Machine pour préparer des boissons chaudes comprenant un dispositif de chauffage électrique (1) selon l'une quelconque des revendications précédentes.

11. Procédé pour obtenir un dispositif de chauffage électrique (1) selon l'une quelconque des revendications précédentes, dans lequel il est prévu une étape consistant à
a) effectuer un traitement mécanique, de préférence une finition satinée, de la surface d'un tronçon central d'un tube métallique, de manière à obtenir ledit tube métallique (5) ayant un tronçon central (53) avec une rugosité (Ra3) supérieure à la rugosité (Ra1, Ra2) de la surface extérieure de chacun des deux tronçons d'extrémité (51, 52).

12. Procédé selon la revendication 11, dans lequel ledit traitement mécanique, en particulier ladite finition satinée, est effectué de sorte que la surface extérieure du tronçon central (53) comporte une pluralité de canaux ou de rainures s'étendant sensiblement au moins partiellement autour dudit axe (X).

13. Procédé selon la revendication 11 ou 12, dans lequel, après l'étape a), le tube (5) est inséré dans le corps métallique (2), puis le tronçon central (53) est brasé sur le corps métallique (2) au moyen d'un matériau de brasage.
